# EUROPÄISCHE PATENTSCHRIFT

(11) **EP 3 700 065 B1**
(45) Veröffentlichungstag und Bekanntmachung des Hinweises auf die Patenterteilung: **25.02.2026**
(21) Anmeldenummer: 20154260.2
(22) Anmeldetag: 29.01.2020
(51) Int. Cl.: H02K 5/10, H02K 5/22

(54) **ELEKTRISCHER ANTRIEB**
ELECTRIC DRIVE
ENTRAÎNEMENT ÉLECTRIQUE

(30) Priorität: 21.02.2019 DE 102019202370
(43) Veröffentlichungstag der Anmeldung: 26.08.2020
(73) Patentinhaber: Bühler Motor GmbH, 90459 Nürnberg (DE)
(72) Erfinder: LEYKAMM, Jürgen, 91241 Kirchensittenbach (DE)

(56) Entgegenhaltungen:
- DE-A1- 102007 035 094
- DE-A1- 102015 223 597
- DE-A1- 19 510 287
- DE-A1- 19 712 209
- JP-A- H09 121 510
- JP-U- H0 688 165

## Beschreibung

Die Erfindung betrifft einen elektrischen Antrieb (1), mit einem urgeformten Gehäuse (2) mit einem Hohlraum (3) zur Aufnahme eines Stators (4), welcher in oder entgegen einer ersten Entformungsrichtung (6) montierbar ist, einem mit dem Gehäuse (2) einstückigen Stecker (5), welcher mit einem Gegenstecker verbindbar ist, dessen Steckrichtung in oder entgegen einer zweiten Entformungsrichtung (7) ausgerichtet ist, wobei die erste Entformungsrichtung (6) und die zweite Entformungsrichtung (7) sich um mindestens 10° und maximal 170° voneinander unterscheiden. Elektrische Antriebe sind häufig unter Umgebungsbedingungen im Einsatz, welche eine IP-Dichtheit erfordern. Oft unterliegen elektrische Antriebe auch hohen Temperaturwechselbelastungen, sei es aus der Umgebung oder durch im Antrieb erzeugte Wärme. Die Temperaturunterschiede führen bei den abgedichteten Gehäusen zu erheblichen Druckdifferenzen, die zu Beschädigungen innerhalb des Antriebs führen können. Um diese zu vermeiden muss für einen Druckausgleich gesorgt werden. Dies kann auf unterschiedliche Weise geschehen. Ein Druckausgleich kann bei hermetischer Dichtung durch einen Balg erfolgen, der sich ausdehnen kann. Oft genügt es jedoch wenn Gase das Gehäuse passieren können, Flüssigkeiten jedoch nicht. Hierfür ist eine Reihe von geeigneten Druckausgleichsmembranen bekannt, die beispielsweise aus einem zum Teil mehrere Lagen umfassenden engen Gewebe bestehen. Die Befestigung solcher meist flexibler Bauteile an einem starren Gehäuse erfordert einen teils erheblichen Aufwand mit Zusatzteilen und zusätzlichen Verfahrensschritten. Eine einfachere Möglichkeit besteht darin eine Kunststoffmembran, deren Durchlässigkeit etwa durch Recken bewirkt wird auf ein Gehäuse zu schweißen. Mögliche Materialien für solche Membranen sind Polytetrafluorethylen (PTFE), Polyethersulfon (PES) oder Nylon.

Schweißverbindungen von derart dünnen Membranen können naturgemäß keinen großen Kräften widerstehen. Eine bekannte Gefahr für diese Verbindung besteht durch Wasserstrahlen, die mit hohem Druck auf das Druckausgleichselement auftreffen. Diese äußere Einwirkung kann zur Beschädigung oder Zerstörung der Verbindung oder der Membran führen. Um dies zu verhindern sind bereits Abdeckungen im Einsatz, die zumindest verhindern, dass ein direkt einwirkender Wasserstrahl das Druckausgleichselement erreicht. Dies erhöht wiederum den Herstellungsaufwand.

Die DE 197 12 209 A1 offenbart ein Hydraulikaggregat für eine hydraulische Steuer- und/oder Regelvorrichtung, insbesondere für Blockierschutz- und/oder schlupfgeregelte Kraftfahrzeug-Bremsanlagen, mit einer in einem Reglergehäuse angeordneten Steuer- und Regelelektronik sowie mit einem mit dem Reglergehäuse verbundenen Ventilblock, an dem neben anderen über Druckmittelkanäle miteinander verbundenen Funktionselementen, wenigstens ein elektrisches Antriebselement für ein oder mehrere Druckerzeugerelemente angeordnet sind, wobei dem elektrischen Antriebselement zugeordnete Hohlräume über eine Druckausgleichsöffnung be- bzw. entlüftbar sind und wobei das elektrische Antriebselement über einen elektrischen Leiter umfassende Anschlusskomponente an die Steuer- und Regelelektronik angeschlossen sind, wobei die Hohlräume ein in die Druckausgleichsöffnung mündender Kanal vorgesehen ist, durch den oder in dessen Wandung wenigstens im sich der Druckausgleichsöffnung anschließendem Abschnitt elektrische Leiter der Anschlusskomponenten verlaufen.

JP 6-88195 U zeigt eine Motorentlüftungsstruktur für einen Motor mit einem Verbinderabschnitt, der ein Entlüftungsloch aufweist, um das Innere des Motors nach außen hin entlüften zu können.

Die JP 9-121510 A beschreibt ferner einen Motor mit einem Entlüftungsablass, der mit dem Motorjoch verbunden ist. Ein Lüfterseitiger Stirnbügel mit einem Luftdurchlass ist vorgesehen, der Luft von einem Lüfter aufnimmt.

Aufgabe der Erfindung ist es bei einem bestehenden Antrieb der beschriebenen Gattung für einen Druckausgleich zu sorgen, der nahezu ohne zusätzlichen Aufwand realisierbar ist und dennoch einen guten Schutz eines Druckausgleichsmittels gewährleistet.

Diese Aufgabe wird durch die Merkmale des Anspruchs 1 gelöst. Dadurch, dass das Gehäuse (2) einen Entlüftungskanal (8) aufweist, welcher parallel zur zweiten Entformungsrichtung (7) verläuft und eine Verbindung zwischen dem Hohlraum (3) und der Umgebung des elektrischen Antriebs (1) herstellt, ist kein zusätzlicher Schieber in einem Spritzgusswerkzeug erforderlich, weil bereits für die Entformung der Steckerkontur ein Schieber notwendig ist, welcher zusätzlich auch für die Entformung eines Entlüftungskanals (8) verwendbar ist, welcher eine Verbindung zwischen dem Hohlraum und der Umgebung herstellt.

Zweckmäßigerweise ist vorgesehen, dass dieser Entlüftungskanal (8) durch ein gasdurchlässiges und Flüssigkeiten abweisendes Druckausgleichsmittel (9) verschlossen ist. Eine Möglichkeit der Befestigung dieses Druckausgleichsmittels (9) ist ein Verschweißen mittels Ultraschall oder Laserstrahlen unmittelbar auf dem Gehäuse.

Alternativ besteht die Möglichkeit, dass das Druckausgleichsmittel (9) mit dem Gehäuse (2) verklebt ist. Klebestellen sind jedoch sehr empfindlich gegenüber mechanischen und chemischen Belastungen, so dass dieses Verfahren in vielen Einsatzfällen ungeeignet ist.

Das Druckausgleichsmittel kann ein poröses Gummiteil sein, diese besteht aus gepressten Gummipartikeln.

Zur einfacheren Montage und Befestigung besteht das Druckausgleichsmittel (9) aus einem Haltekragen mit vergrößertem Durchmesser und einen Durchlassbereich mit einem kleineren Durchmesser. Dabei wird der Durchlassbereich in den Entlüftungskanal eingepresst oder eingeklemmt.

Da der Entlüftungskanal (8) aus fertigungstechnischen Gründen zumindest abschnittsweise eine konische Form hat, kann das Druckausgleichsmittel über seine Einbaulänge einen konstanten oder einen sich leicht verjüngenden Querschnitt aufweisen und im Entlüftungskanal (8) sicher gehalten werden.

Das Druckausgleichsmittel kann am äußeren oder inneren Ende des Entlüftungskanals (8) angeordnet sein, vorausgesetzt die Zugänglichkeit im Montageprozess ist in beiden Fällen gegeben. Vorzugsweise ist das Druckausgleichsmittel (9) in den Entlüftungskanal eingepresst oder eingeklemmt. Auf diese Weise lässt es sich einfach und sicher montieren.

Das Gehäuse (2) weist in seiner Grundform eine runde Außenkontur auf, welche am oder um den Entlüftungskanal (8) abgeflacht ist. Hierdurch lässt sich ein zu verschweißendes Druckausgleichsmittel (9) einfacher zuführen und verschweißen. Eine Schweißsonotrode kann dabei einfach gestaltet sein und flach aufliegen. Gemäß einer vorteilhaften Weiterbildung der Erfindung wird vorgeschlagen, dass der elektrische Antrieb (1) an eine Applikation angebaut ist und dass das Druckausgleichsmittel (9) von einem Gehäusebereich (10) der Applikation gasdurchlässig abgedeckt ist. Diese Abdeckung kann Wasserstrahlen abhalten und dennoch den Gasaustausch ermöglichen, indem ein geringer Spalt zwischen dem Gehäuse (2) und dem Gehäusebereich (10) der Applikation bestehen bleibt. Eine solche Applikation könnte eine Ölpumpe, eine Wasserpumpe, eine SCR-Pumpe oder ein Zentrifugalabscheider sein.

Um eine Gasdurchlässigkeit sicherzustellen, kann es sinnvoll sein, dass der Gehäusebereich (10) auf einer dem urgeformten Gehäuse (2) zugewandten Seite eine Abschrägung (11) oder eine andere Freisparung aufweist. Dabei wird vor allem darauf geachtet, dass solche Geometrien keinen Zusatzaufwand erfordern.

Eine Zusatzaufwand ist insbesondere dann nicht erforderlich, wenn der elektrische Antrieb (1) ohnehin ganz oder teilweise in die Applikation eintaucht.

Solche bereits ohne Druckausgleichsmittel (9) vorhandene Geometrien, die für dessen Abdeckung zum Schutz vor Wasserstrahlen aber hervorragend geeignet sind, sind Dichtungskonturen. Der Gehäusebereich (10) der Applikation ist hierbei über das Gehäuse (2) des elektrischen Antriebs (1) gefügt, wobei ein Zwischenraum (14) verbleibt, in welchem ist eine Dichtung (12) angeordnet.

Häufig werden für solche Zwecke O-Ringe eingesetzt, genauso eignen sich auch andere Formdichtungen, z. B. Lippendichtungen.

Der Entlüftungskanal (8) muss nicht notwendigerweise durchgängig geradlinig ausgeführt sein, sondern kann aus einem radialen Abschnitt (25) und einem axialen Abschnitt (26) bestehen. Hierdurch wird die Anzahl der benötigten Werkzeugschieber nicht erhöht, da der axiale Abschnitt (26) parallel zur ersten Entformungsrichtung (6) und der radiale Abschnitt (25) parallel zur zweiten Entformungsrichtung (7) ist.

Der Entlüftungskanal (8) kann grundsätzlich nahezu beliebige Querschnittsformen aufweisen, bevorzugt werden jedoch kreisförmige oder ellipsenförmige Querschnitte, weil die erforderlichen Werkzeuggeometrien dadurch einfacher herstellbar sind und eine höhere Standzeit erlauben.

Um den Gasaustausch zu erleichtern und dennoch eine große Auflagefläche für das Druckausgleichselement (9) zu erhalten, kann der Entlüftungskanal (8) aus einer Mehrzahl parallel angeordneter Kanäle bestehen.

Bei Verwendung einer Mehrzahl paralleler Kanäle, sollten diese aus wirtschaftlichen Gründen durch ein einziges Druckausgleichselement (9) abgedeckt werden.

Der erfindungsgemäße elektrische Antrieb kann in einer Vielzahl von Applikationen eingesetzt werden, z. B bei einer Ölpumpe, einer Wasserpumpe, einer SCR-Pumpe, einer Vakuumpumpe oder einem Zentrifugalabscheider.

Ausführungsbeispiele der Erfindung werden nachfolgend anhand der Zeichnung näher erläutert. Es zeigen:
- Fig. 1: einen Teilausschnitt aus einem elektrischen Antrieb,
- Fig. 2: eine erste Variante des elektrischen Antriebs,
- Fig. 3: eine zweite Variante des elektrischen Antriebs,
- Fig. 4: eine dritte Variante des elektrischen Antriebs,
- Fig. 5: eine erste Querschnittsform eines Entlüftungskanals,
- Fig. 6: eine zweite Querschnittsform eines Entlüftungskanals
und
- Fig. 7: eine dritte Querschnittsform eines Entlüftungskanals.

Hinweis: Bezugszeichen mit Index und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

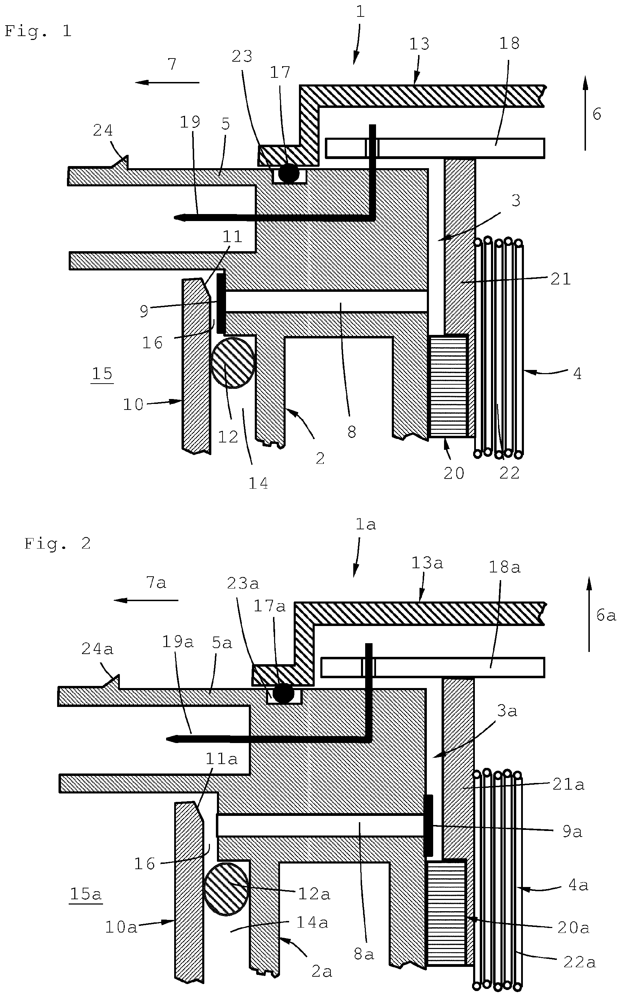

Fig. 1 zeigt einen Teilausschnitt aus einem elektrischen Antrieb, dessen Besonderheit es ist in jedem Fall ein Schieberwerkzeug zur Entformung eines Gehäuses 2 zu benötigen, weil ein mit diesem einstückiger Stecker 5, insbesondere dessen Steck- und damit die Entformungsrichtung 7 hier um 90° gegenüber der Entformungsrichtung 6 eines Hohlraums 3, welche übereinstimmt mit einer zur Montagerichtung eines Stators 4 entgegengesetzten Richtung, ausgerichtet ist. Im Gehäuse 2 ist ein Entlüftungskanal 8 zwischen dem Hohlraum 3 und einer Umgebung 15 des elektrischen Antriebs angeordnet. An einem äußeren umgebungsnahen Ende des Entlüftungskanals 8 ist ein Druckausgleichsmittel 9 angeordnet. Zum Schutz vor Wasser- oder Dampfstrahlen und anderen Beeinträchtigungen ist das Druckausgleichsmittel 9 durch einen Gehäusebereich 10 einer Applikation abgedeckt, wobei ein Spalt 16 verbleibt, durch welchen Gase aus dem Hohlraum 3 und dem Entlüftungskanal 8 entweichen können.

An einem zum Gehäuse 2 und zum Stecker 5 hin gerichteten Ende des Gehäusebereichs 10 ist eine Abschrägung 11 vorhanden, welche einen zusätzlichen Zugang zum Druckausgleichsmittel gewährleistet und zur Montageerleichterung für eine Dichtung 12 dient, welche zwischen dem Gehäusebereich 10 der Applikation und dem Gehäuse 2 des elektrischen Antriebs in einem Zwischenraum 14 eingelegt ist. Die Dichtung 12 besteht aus Elastomermaterial und ist in Form eines O-Rings ausgebildet.

Das Gehäuse 2 ist durch einen Gehäusedeckel 13 (Metall oder Kunststoff) verschlossen. Zwischen dem Gehäuse 2 und dem Gehäusedeckel 13 ist ein O-Ring 17 in eine Nut 23 eingelegt. Zwischen dem Gehäusedeckel 13 und dem Gehäuse 2 ist eine Leiterplatte 13 angeordnet.

Vom Stecker 5 führt ein Leitermittel 19 entgegen der zweiten Entformungsrichtung 7 durch das Gehäuse 2 hindurch, wobei es einmal abgewinkelt ist und in Richtung der ersten Entformungsrichtung 6 zur Leiterplatte 18 führt und dort mit dieser Kontaktiert ist. Das Leitermittel 19 ist als Stanzblech ausgeführt und mit dem Gehäuse 2 durch Urformen gefügt (umspritzt).

Weiter sind ein Statorblechpaket 20, ein Isolierstoffkörper 21, eine Wicklung 22 und am Stecker 5 eine Rastnase 24 dargestellt. Die Leiterplatte 18 stützt sich am Isolierstoffkörper 21 ab.

Das Gehäuse besteht aus einem glasfaserverstärkten PPS-Material (Polyphenylensulfid). Alternativ sind Polyphtalamide (PPA), insbesondere auch PA6T/6I, PA66-GF oder weitere technische Kunststoffe einsetzbar.

Fig. 2 zeigt eine erste Variante eines elektrischen Antriebs 1a, mit einem Gehäuse 2a, einem Gehäusedeckel 13a, einer Leiterplatte 18a, einem Stator 4a, einem Gehäusebereich 10a einer Applikation, einer Dichtung 12a, zwischen dem Gehäuse 2a und dem Gehäusebereich 10a, einem in einer Nut 23a des Gehäuses 2a eingelegten und zwischen dem Gehäuse 2a und dem Gehäusedeckel 13a angeordneten O-Ring 17a und einem Druckausgleichsmittel 9a. Im Gegensatz zur ersten Ausführungsform ist das Druckausgleichsmittel 9a hier am inneren Ende des Entlüftungskanals 8a von innen montiert. An dieser Stelle ist er noch besser vor äußeren Einflüssen geschützt. Weiter sind ein Statorblechpaket 20a, ein Isolierstoffkörper 21a und eine Wicklung 22a als Bestandteile des Stators 4a, ein Abschrägung 11a am Gehäusebereich 10a und ein Leitermittel 19a, welches mit dem Gehäuse 2a durch Urformen gefügt und mit der Leiterplatte 18a kontaktiert ist.

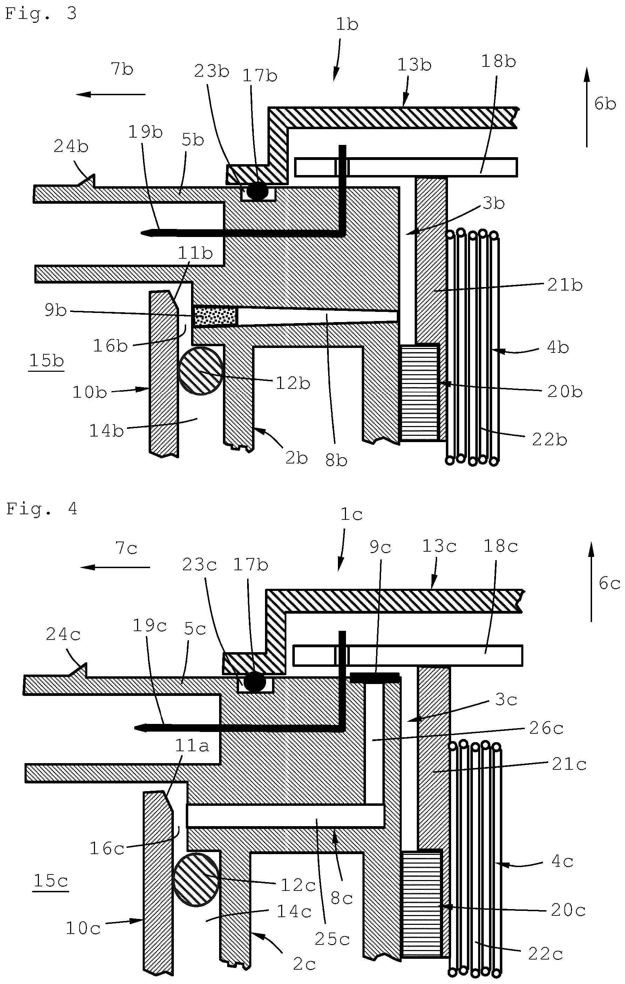

Fig. 3 zeigt eine zweite Variante eines elektrischen Antriebs 1b, mit einem Gehäuse 2b, einem Gehäusedeckel 13b, einer Leiterplatte 18b, einem Stator 4b, einem Gehäusebereich 10b einer Applikation, einer Dichtung 12b, zwischen dem Gehäuse 2b und dem Gehäusebereich 10b, einem in einer Nut 23b des Gehäuses 2b eingelegten und zwischen dem Gehäuse 2b und dem Gehäusedeckel 13b angeordneten O-Ring 17b und einem Druckausgleichsmittel 9b. Der Entlüftungskanal 8b ist hier konisch ausgeführt und das Druckausgleichsmittel 9b als kegelstumpfförmiges Bauteil kraftschlüssig im Entlüftungskanal 8b gehalten. Das Druckausgleichsmittel ist hier als Sinterkörper ausgebildet. Weiter sind ein Statorblechpaket 20b, ein Isolierstoffkörper 21b und eine Wicklung 22b als Bestandteile des Stators 4b, ein Abschrägung 11b am Gehäusebereich 10b und ein Leitermittel 19a, welches mit dem Gehäuse 2b durch Urformen gefügt und mit der Leiterplatte 18b kontaktiert ist.

Fig. 4 zeigt eine dritte Variante eines elektrischen Antriebs 1c, mit einem Gehäuse 2c, einem Gehäusedeckel 13c, einer Leiterplatte 18c, einem Stator 4c, einem Gehäusebereich 10c einer Applikation, einer Dichtung 12c, zwischen dem Gehäuse 2c und dem Gehäusebereich 10c, einem in einer Nut 23c des Gehäuses 2c eingelegten und zwischen dem Gehäuse 2c und dem Gehäusedeckel 13c angeordneten O-Ring 17c und einem Druckausgleichsmittel 9c. Im Gegensatz zur ersten Ausführungsform ist das Druckausgleichsmittel 9c hier am inneren Ende des Entlüftungskanals 8c von innen montiert. Im Gegensatz zur ersten Variante ist der Entlüftungskanal nicht geradlinig, sondern abgewinkelt ausgeführt. Ein radialer Abschnitt 25a ist parallel zur zweiten Entformungsrichtung 7c und ein axialer Abschnitt 26c parallel zur ersten Entformungsrichtung 6c ausgerichtet. An dieser Stelle ist er noch besser als in der ersten Variante vor äußeren Einflüssen geschützt. Weiter sind ein Statorblechpaket 20c, ein Isolierstoffkörper 21c und eine Wicklung 22c als Bestandteile des Stators 4c, ein Abschrägung 11c am Gehäusebereich 10c und ein Leitermittel 19c, welches mit dem Gehäuse 2c durch Urformen gefügt und mit der Leiterplatte 18c kontaktiert ist.

Die Erfindung ist nicht auf die gezeigten Beispiele beschränkt, vielmehr sind eine Vielzahl von Varianten und Anordnungen denkbar, wobei auch andere Arten von Druckausgleichsmitteln und Gehäusegeometrien einsetzbar sind. Grundsätzlich könnte das Gehäuse auch aus einem Metalldruckguss bestehen, wobei dann das Druckausgleichsmittel auf andere Weise als durch Schweißen befestigt werden müsste.

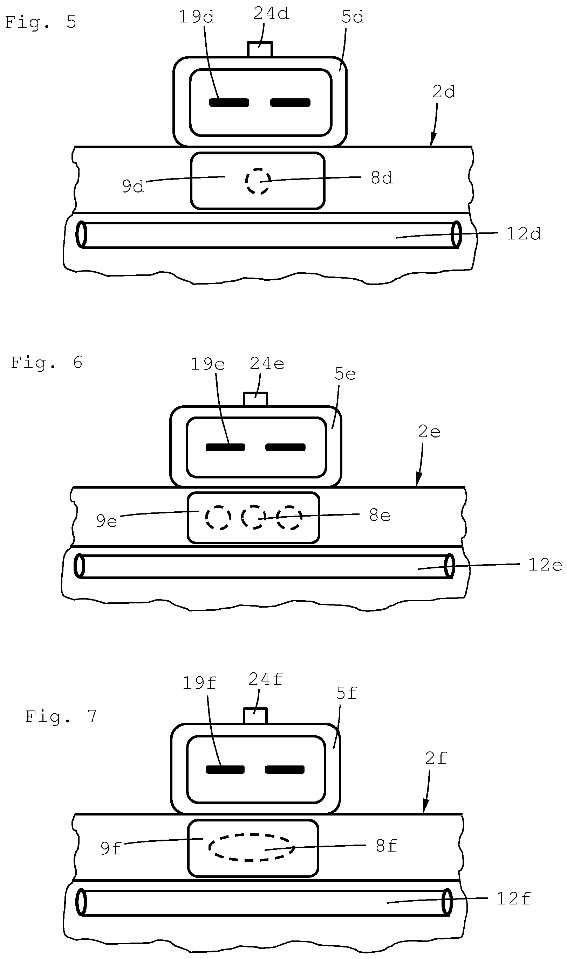

Fig. 5 zeigt eine erste Querschnittsform eines Entlüftungskanals 8d in einem Gehäuse 2d, mit Stecker 5d. Der Querschnitt des Entlüftungskanals 8d ist hier kreisförmig ausgebildet. Ein Ende des Entlüftungskanals 8d ist durch ein Druckausgleichsmittel 9e abgedeckt. Weiter sind zwei Leitermittel 19d, ein Rastnase 24d und eine Dichtung 12d dargestellt.

Fig. 6 zeigt eine zweite Querschnittsform eines Entlüftungskanals 8e in einem Gehäuse 2e mit Stecker 5e. Der Entlüftungskanal 8e besteht hier aus drei nebeneinander parallel angeordneten Kanälen. Ein einziges Druckausgleichselement 9e deckt alle drei Kanäle ab. Das Druckausgleichselement ist am äußeren Ende des mehrteiligen Entlüftungskanals 8e mit dem Gehäuse 2e verschweißt. Weiter sind zwei Leitermittel 19e ein Rastnase 24e und eine Dichtung 12d dargestellt.

Fig. 7 zeigt eine dritte Querschnittsform eines Entlüftungskanals 8f in einem Gehäuse 2f mit Stecker 5f. Der Entlüftungskanal 8f ist hier ellipsenförmig ausgebildet. Ein Ende des Entlüftungskanals 8f ist durch ein Druckausgleichselement 9f abgedeckt. Weiter sind zwei Leitermittel 19f, ein Rastnase 24 f und eine Dichtung 12f dargestellt.

### Bezugszeichenliste

- 1: Antrieb
- 2: urgeformtes Gehäuse
- 3: Hohlraum
- 4: Stator
- 5: Stecker
- 6: erste Entformungsrichtung
- 7: zweite Entformungsrichtung
- 8: Entlüftungskanal
- 9: Druckausgleichsmittel
- 10: Gehäusebereich
- 11: Abschrägung
- 12: Dichtung
- 13: Gehäusedecke
- 14: Zwischenraum
- 15: Umgebung
- 16: Spalt
- 17: O-Ring
- 18: Leiterplatte
- 19: Leitermittel
- 20: Statorblechpaket
- 21: Isolierstoffkörper
- 22: Wicklung
- 23: Nut
- 24: Rastnase
- 25: radialer Abschnitt
- 26: axialer Abschnitt

## Patentansprüche

1. Elektrischer Antrieb (1), mit einem urgeformten Gehäuse (2) mit einem Hohlraum (3) zur Aufnahme eines Stators (4), welcher in oder entgegen einer ersten Entformungsrichtung (6) montierbar ist, einem mit dem Gehäuse (2) einstückigen Stecker (5), welcher mit einem Gegenstecker verbindbar ist, dessen Steckrichtung in oder entgegen einer zweiten Entformungsrichtung (7) ausgerichtet ist, wobei die erste Entformungsrichtung (6) und die zweite Entformungsrichtung (7) sich um mindestens 10° und maximal 170° voneinander unterscheiden, **dadurch gekennzeichnet, dass** das Gehäuse (2) einen Entlüftungskanal (8) aufweist, welcher parallel zur zweiten Entformungsrichtung (7) verläuft und eine direkte Verbindung zwischen dem Hohlraum (3) und der Umgebung des elektrischen Antriebs (1) herstellt, wobei der Entlüftungskanal (8) durch ein gasdurchlässiges und Flüssigkeiten abweisendes Druckausgleichsmittel (9) verschlossen ist und wobei der Elektrischer Antrieb an eine Applikation angebaut ist und dass das Druckausgleichsmittel (9) von einem Gehäusebereich (10) der Applikation gasdurchlässig abgedeckt ist.

2. Elektrischer Antrieb nach Anspruch 1, **dadurch gekennzeichnet, dass** das Druckausgleichsmittel (9) aus einer Kunststoffmembran besteht, welche an ein aus Kunststoff bestehendes Gehäuse (2) geschweißt ist.

3. Elektrischer Antrieb nach Anspruch 1, **dadurch gekennzeichnet, dass** das Druckausgleichsmittel (9) mit dem Gehäuse (2) verklebt ist.

4. Elektrischer Antrieb nach Anspruch 1, **dadurch gekennzeichnet, dass** das Druckausgleichsmittel (9) aus einem porösen Gummiteil besteht.

5. Elektrischer Antrieb nach Anspruch 3 oder 4, **dadurch gekennzeichnet, dass** das Druckausgleichsmittel (9) aus einem Haltekragen mit vergrößertem Durchmesser und einen Durchlassbereich mit einem kleineren Durchmesser aufweist.

6. Elektrischer Antrieb nach Anspruch 3, 4 oder 5, **dadurch gekennzeichnet, dass** das Druckausgleichsmittel (9) über seine Einbaulänge einen konstanten oder einen sich leicht verjüngenden Querschnitt aufweist.

7. Elektrischer Antrieb nach Anspruch 1 und mindestens einem der folgenden, **dadurch gekennzeichnet, dass** das Druckausgleichsmittel am äußeren oder inneren Ende des Entlüftungskanals (8) angeordnet ist.

8. Elektrischer Antrieb nach Anspruch 4, 5, 6 oder 7, **dadurch gekennzeichnet, dass** das Druckausgleichsmittel (9) in den Entlüftungskanal eingepresst oder eingeklemmt ist.

9. Elektrischer Antrieb nach zumindest einem der vorangehenden Ansprüche, **dadurch gekennzeichnet, dass** das Gehäuse (2) in seiner Grundform eine runde Außenkontur aufweist und diese am oder um den Entlüftungskanal (8) abgeflacht ist.

10. Elektrischer Antrieb nach einem der vorangehenden Ansprüche, **dadurch gekennzeichnet, dass** der Gehäusebereich (10) auf einer dem urgeformten Gehäuse (2) zugewandten Seite eine Abschrägung (11) aufweist.

11. Elektrischer Antrieb nach Anspruch 7 oder 8 in Verbindung mit Anspruch 10, **dadurch gekennzeichnet, dass** er teilweise in die Applikation eintaucht.

12. Elektrischer Antrieb nach Anspruch 7, 8 oder 9 in Verbindung mit zumindest einem der vorangehenden Ansprüche, **dadurch gekennzeichnet, dass** zwischen dem Gehäuse (2) des elektrischen Antriebs (1) und dem Gehäusebereich (10) der Applikation eine Dichtung (12) angeordnet ist.

13. Elektrischer Antrieb nach Anspruch 12, **dadurch gekennzeichnet, dass** die Dichtung (12) ein O-Ring ist.

14. Elektrischer Antrieb nach zumindest einem der vorangehenden Ansprüche, **dadurch gekennzeichnet, dass** der Entlüftungskanal (8) einen kreisförmigen oder ellipsenförmigen Querschnitt aufweist.

15. Elektrischer Antrieb nach zumindest einem der vorangehenden Ansprüche, **dadurch gekennzeichnet, dass** der Entlüftungskanal (8) aus einer Mehrzahl parallel angeordneter Kanäle besteht.

16. Elektrischer Antrieb nach Anspruch 15, **dadurch gekennzeichnet, dass** die Mehrzahl paralleler Kanäle durch ein einziges Druckausgleichselement (9) abgedeckt sind.

17. Elektrischer Antrieb nach zumindest einem der vorangehenden Ansprüche, **dadurch gekennzeichnet, dass** die Applikation eine Ölpumpe, eine Wasserpumpe, eine SCR-Pumpe, eine Vakuumpumpe oder ein Zentrifugalabscheider ist.

## Claims

1. Electric drive (1), comprising a molded housing (2) with a cavity (3) for receiving a stator (4) which can be installed in or counter to a first demolding direction (6), a connector (5) which is formed in one piece with the housing (2) and is connectable to a mating connector, the direction of connection of which is oriented in or counter to a second demolding direction (7), the first demolding direction (6) and the second demolding direction (7) differing from each other by at least 10° and at most 170°, **characterized in that** the housing (2) has a vent channel (8) which extends parallel to the second demolding direction (7) and establishes a direct connection between the cavity (3) and the environment surrounding the electric drive (1), the vent channel (8) being closed by a gas-permeable and liquid-repellent pressure-equalizing means (9), and the electric drive being mounted on an application, and **in that** the pressure-equalizing means (9) is covered by a housing region (10) of the application in a gas-permeable manner.

2. Electric drive according to claim 1, **characterized in that** the pressure-equalizing means (9) consists of a plastic membrane which is welded to a housing (2) made of plastic.

3. Electric drive according to claim 1, **characterized in that** the pressure-equalizing means (9) is adhesively bonded to the housing (2).

4. Electric drive according to claim 1, **characterized in that** the pressure-equalizing means (9) consists of a porous rubber part.

5. Electric drive according to claim 3 or 4, **characterized in that** the pressure-equalizing means (9) comprises of a holding collar of larger diameter and a passage region of smaller diameter.

6. Electric drive according to claim 3, 4 or 5, **characterized in that** the pressure-equalizing means (9) has a constant or slightly tapering cross-section along its installation length.

7. Electric drive according to claim 1 and at least one of the subsequent claims, **characterized in that** the pressure-equalizing means is arranged at the outer or inner end of the vent channel (8).

8. Electric drive according to claim 4, 5, 6 or 7, **characterized in that** the pressure-equalizing means (9) is pressed or clamped into the vent channel.

9. Electric drive according to at least one of the preceding claims, **characterized in that** the housing (2) in its basic shape has a round outer contour, and this is flattened at or around the vent channel (8).

10. Electric drive according to any one of the preceding claims, **characterized in that** the housing region (10) has a chamfer (11) on a side facing toward the molded housing (2).

11. Electric drive according to claim 7 or 8 in combination with claim 10, **characterized in that** it is partially immersed in the application.

12. Electric drive according to claim 7, 8 or 9 in combination with at least one of the preceding claims, **characterized in that** a seal (12) is arranged between the housing (2) of the electric drive (1) and the housing region (10) of the application.

13. Electric drive according to claim 12, **characterized in that** the seal (12) is an O-ring.

14. Electric drive according to at least one of the preceding claims, **characterized in that** the vent channel (8) has a circular or elliptical cross-section.

15. Electric drive according to at least one of the preceding claims, **characterized in that** the vent channel (8) consists of a plurality of channels arranged in parallel.

16. Electric drive according to claim 15, **characterized in that** the plurality of parallel channels are covered by a single pressure-equalizing element (9).

17. Electric drive according to at least one of the preceding claims, **characterized in that** the application is an oil pump, a water pump, an SCR pump, a vacuum pump, or a centrifugal separator.

## Revendications

1. Entraînement électrique (1) comprenant un boîtier (2) moulé par injection avec
une cavité (3) destinée à recevoir un stator (4) qui peut être monté dans le sens d'une première direction de démoulage (6) ou dans le sens inverse, une fiche (5) montée d'un seul tenant avec le boîtier (2), qui peut être connectée à une contre-fiche dont la direction d'enfichage est orientée dans un deuxième sens de démoulage (7) ou en sens inverse, le premier sens de démoulage (6) et le deuxième sens de démoulage (7)
différant l'un de l'autre de 10° minimum et de 170° maximum, **caractérisé en ce que** le boîtier (2) présente un canal de purge (8) qui s'étend parallèlement au deuxième sens de démoulage (7) et établit une communication directe entre la cavité (3) et l'environnement de
l'entraînement électrique (1), le canal de purge (8) étant fermé par un moyen de compensation de pression (9) perméable aux gaz et imperméable aux liquides, et l'entraînement électrique étant monté sur une application, et **en ce que** le moyen de compensation de pression (9) est recouvert de manière perméable aux gaz par une zone de boîtier (10) de l'application.

2. Entraînement électrique selon la revendication 1, **caractérisé en ce que** le moyen de compensation de pression (9) est constitué d'une membrane en plastique qui est soudée à un boîtier (2) en plastique.

3. Entraînement électrique selon la revendication 1, **caractérisé en ce que** le moyen de compensation de pression (9) est collé au boîtier (2).

4. Entraînement électrique selon la revendication 1, **caractérisé en ce que** le moyen de compensation de pression (9) est constitué d'une pièce en caoutchouc poreux.

5. Entraînement électrique selon la revendication 3 ou 4, **caractérisé en ce que** le moyen de compensation de pression (9) comprend une collerette de maintien de diamètre agrandi et une zone de passage de diamètre réduit.

6. Entraînement électrique selon la revendication 3, 4 ou 5, **caractérisé en ce que** le moyen de compensation de pression (9) présente une section transversale constante ou légèrement conique sur toute sa longueur d'installation.

7. Entraînement électrique selon la revendication 1 et au moins l'une des suivantes, **caractérisé en ce que** le moyen de compensation de pression est agencé à l'extrémité extérieure ou intérieure du canal de purge (8).

8. Entraînement électrique selon la revendication 4, 5, 6 ou 7, **caractérisé en ce que** le moyen de compensation de pression (9) est pressé ou serré dans le canal de purge.

9. Entraînement électrique selon au moins l'une des revendications précédentes, **caractérisé en ce que** le boîtier (2) présente dans sa forme de base un contour extérieur rond qui est aplati au niveau du canal de purge ou autour (8).

10. Entraînement électrique selon l'une des revendications précédentes, **caractérisé en ce que** la zone de boîtier (10) présente un biseau (11) sur un côté tourné vers le boîtier moulé par injection (2).

11. Entraînement électrique selon la revendication 7 ou 8 conjointement avec la revendication 10, **caractérisé en ce qu'**il s'enfonce partiellement dans l'application.

12. Entraînement électrique selon la revendication 7, 8 ou 9 conjointement avec au moins l'une des revendications précédentes, **caractérisé en ce qu'**un joint d'étanchéité (12) est agencé entre le boîtier (2) de l'entraînement électrique (1) et la zone de boîtier (10) de l'application.

13. Entraînement électrique selon la revendication 12, **caractérisé en ce que** le joint d'étanchéité (12) est un joint torique.

14. Entraînement électrique selon au moins l'une des revendications précédentes, **caractérisé en ce que** le canal de purge (8) présente une section transversale circulaire ou elliptique.

15. Entraînement électrique selon au moins l'une des revendications précédentes, **caractérisé en ce que** le canal de purge (8) est constitué d'une pluralité de canaux agencés parallèlement les uns des autres.

16. Entraînement électrique selon la revendication 15, **caractérisé en ce que** la pluralité de canaux parallèles est recouverte par un seul élément de compensation de pression (9).

17. Entraînement électrique selon au moins l'une des revendications précédentes, **caractérisé en ce que** l'application est une pompe à huile, une pompe à eau, une pompe SCR, une pompe à vide ou un séparateur centrifuge.
